# EUROPÄISCHE PATENTSCHRIFT

(11) **EP 2 304 215 B1**
(45) Veröffentlichungstag und Bekanntmachung des Hinweises auf die Patenterteilung: **10.09.2014**
(21) Anmeldenummer: 09780784.6
(22) Anmeldetag: 17.07.2009
(51) Int. Cl.: F02M 37/22

(54) **MODULEINSATZ ZUM EINBAU IN EINEN FLÜSSIGKEITSFILTER**
MODULE INSERT FOR INSTALLATION IN A LIQUID FILTER
INSERT MODULAIRE À MONTER DANS UN FILTRE POUR LIQUIDE

(30) Priorität: 26.07.2008 DE 102008034901
(43) Veröffentlichungstag der Anmeldung: 06.04.2011
(73) Patentinhaber: Mahle International GmbH, 70376 Stuttgart (DE)
(72) Erfinder: BRAUNHEIM, Michael, 73033 Göppingen (DE); GÄNSWEIN, Matthias, 73732 Esslingen (DE); HRODEK, Jörg, A-9125 Mittlern (AT); SIEGLE, Sven, 71364 Winnenden (DE); WLASSA, Richard, 70469 Stuttgart (DE)
(74) Vertreter: BRP Renaud & Partner
(86) Internationale Anmeldenummer: PCT/EP2009/059246
(87) Internationale Veröffentlichungsnummer: WO 2010/012617

(56) Entgegenhaltungen:
- EP-A- 1 726 818
- DE-A1-102007 039 661
- DE-A1-102007 059 051
- DE-U1-202007 007 120

## Beschreibung

Die vorliegende Erfindung betrifft einen Moduleinsatz zum Einbau in einen Flüssigkeitsfilter zur Reinigung des abgeschiedenen Wassers, insbesondere zum Einbau in einen Kraftstofffilter.

Aus der US 5,501,723 ist ein Filter mit Aktivkohle zur Reinigung der Abluft aus einem Kraftstofftank eines Kraftfahrzeugs bekannt. Um die Luft, die über dem Kraftstoff im Tank steht zu reinigen, wird in einen Abluftkanal ein Filter mit Aktivkohle eingesetzt. Um die Reinigungseffizienz zu erhöhen, ist der Filter mit verschiedenen aufeinander folgenden Kammern ausgestaltet durch die die Abluft strömen muss. In jeder Kammer ist dabei Aktivkohle enthalten.

Aus der DE 10 2006 039 581 ist ein Kraftstofffilter bekannt, bei dem an dem Filtergehäuse ein weiterer Filter zur Reinigung des abgelassenen Wassers angebracht ist, der Aktivkohle als weiteres Filtermaterial aufweist. Offen bleibt jedoch, wie der Filter, der die Aktivkohle enthält, gestaltet ist.

Aus der DE 10 2007 039 661 A1 ist ein Kraftstofffilter mit einem Filterelement zum Abscheiden von Partikeln und Wasser aus einem durch den Kraftstofffilter strömenden Kraftstoffstrom, einem Sammelraum zum Sammeln des abgeschiedenen Wassers und mit einem Entwässerer zum Abführen des abgeschiedenen Wassers aus dem Kraftstofffilter bekannt, wobei der Entwässerer als Einheit mit dem Kraftstofffilter oder als davon separate Baugruppe ausgebildet ist. Dabei weist der Entwässerer einen Kohlenwasserstoff-Adsorber zur Adsorption von in dem abgeschiedenen Wasser mitgeführten Kohlenwasserstoffen auf sowie zwei zwischen dem Sammelraum und dem Entwässerer angeordnete und in Reihe geschaltete Ventileinrichtungen auf, die autark voneinander angesteuert sind.

Aus der EP 1 726 818 A2 ist ein weiteres Kraftstofffilter bekannt.

Es ist Aufgabe der vorliegenden Erfindung einen bekannten Kraftstofffilter mittels eines Moduleinsatzes zum Einbau in denselben dahingehend zu verbessern, dass der Moduleinsatz einen kompakten und effizienten Zusatzfilter enthält.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, einen Moduleinsatz zum Einbau in einen Flüssigkeitsfilter zur Reinigung des abgeschiedenen Wassers vorzusehen, der ein Behältnis mit sorbierenden Mitteln zur Aufnahme von Verunreinigungen aus dem abgeschiedenen Wasser aufweist, die derart in dem Behältnis angeordnet sind, dass eine möglichst lange Verweildauer des Wassers im Bereich der sorbierenden Mitteln erreicht werden kann. Innerhalb des Behältnisses ist dabei zumindest ein Leitelement angeordnet, welches die Verweilzeit des abgeschiedenen Wassers im Moduleinsatz verlängert. Hierdurch kann ein besonders hoher Reinigungsgrad des abgeschiedenen Wassers erreicht werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: einen Längsschnitt durch einen erfindungsgemäßen Kraftstofffilter,
- Fig. 2: eine Draufsicht auf den Moduleinsatz,
- Fig. 3: einen Schnitt entlang der Linie A-A aus Fig. 2 des Moduleinsatzes,
- Fig. 4: Detail aus Fig. 3,
- Fig. 5: Detail aus Fig. 3 bei einer anderen Ausführungsform.

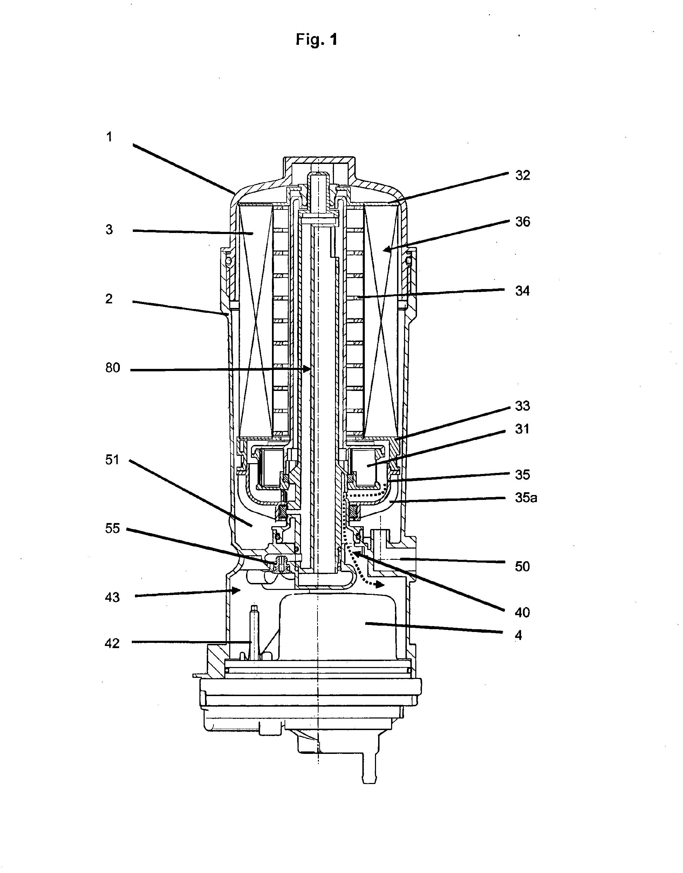

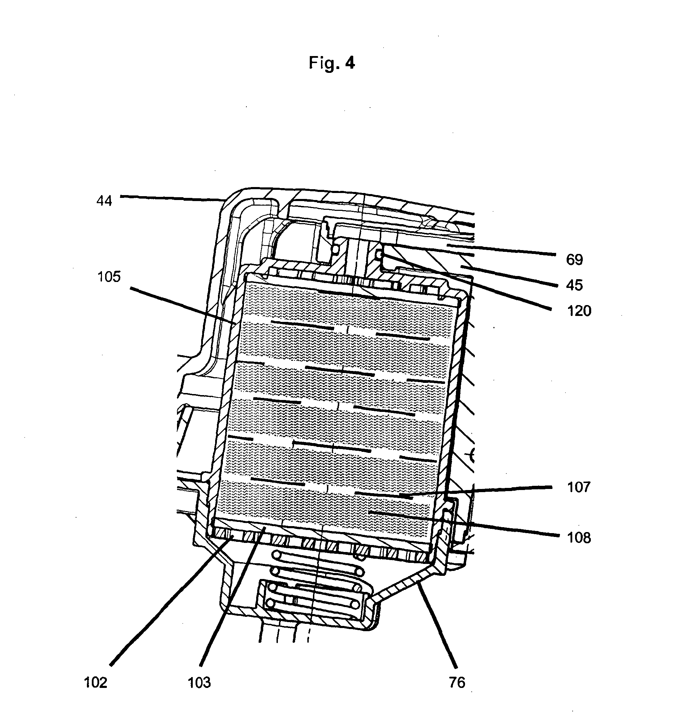

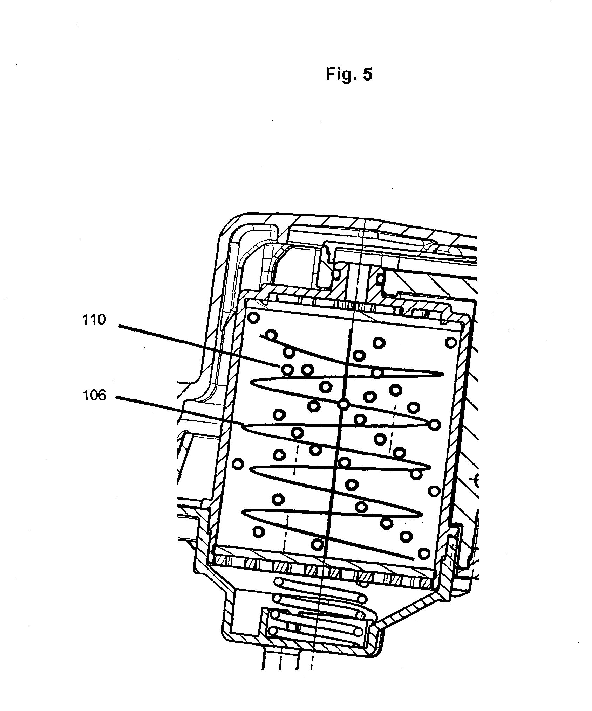

Fig. 1 zeigt einen kompletten erfindungsgemäßen Kraftstofffilter im Längsschnitt. Von oben wird ein Filtergehäuse 2, das sowohl ein Filterelement 3, als auch einen Moduleinsatz 4 aufnimmt, mit einem Deckel 1 verschlossen. Darunter befindet sich ein Filterraum 51, in dem der Kraftstoff von Schwebeteilchen mittels des Filterelementes 3 gereinigt wird. Eine Vorreinigung für gröbere Teilchen gibt es auch, ist hier aber nicht gezeigt. Der detaillierte Aufbau des Filterelementes 3 ist beispielsweise in den Fig. 4 und 5 gezeigt. Das Filterelement 3 besteht aus einer zylindrischen Innenzarge 34 auf der das Spezialpapier als Filter 36 sitzt, sowie einer oberen 32 und einer unteren Endscheibe 33, einem Boden 35 mit Außenverrippung 35a und einem korbförmigem Sieb 31. Beim Zusammenbau des Kraftstofffilters wird dieses wechselbare Filterelement 3 über den Funktionsträger 80 geschoben, der fest im Filtergehäuse 2 angebracht ist und die Medien Wasser und Kraftstoff leitet. Das Filterelement 3, enthält als Filter feinporiges Spezialpapier oder andere Materialien, hier kann bereits das im Kraftstoff vorhandene Wasser koaleszieren. Es fliest dann als kleinste Tröpfchen mit dem Kraftstoff mit zu dem Sieb 31. Der Kraftstoff gelangt durch dieses Sieb 31 hindurch auf die Reinseite und verlässt das Kraftstofffilter über den Funktionsträger 80 und entsprechende Auslasse (nicht gezeigt). Das korbförmige Sieb 31 ist aus einem lipophilen Material so gestaltet, dass sich die bereits vorhandenen Wassertröpfchen weiter vergrößern und dann von der Schwerkraft nach unten in den Wassersammelraum 43 transportiert werden. Je geringer die Anzahl von Schwebestoff im Kraftstoff, desto geringer der Kraftstoffanteil im abgeschiedenen Wasser, daher befindet sich die Wasserabscheidung auf der Reinseite des Filterelementes 3. In den Wassersammelraum 43 ist von unten in das Filtergehäuse 2 der Moduleinsatz 4 eingesetzt und festverschraubt oder anderweitig befestigt.

Der Weg des Wassers ist als Pfeil 40 dargestellt. Mit Bezugszeichen 50 ist der Einlass für den Kraftstoff bezeichnet, von hier aus gelangt er in den Kraftstoffverteilraum 51, durch den hohen Druck von etwa 5-10 bar im Kraftstoffsystem, wird der Kraftstoff durch das Filterelement 3 gedrückt. Diese hohen Drücke mit Druckspitzen von über 20 bar, liegen auch im Wassersammelraum 43 vor. Da aber das Innere des Moduleinsatzes 4 nicht druckstabil ist, wird es durch ein druckstabiles Gehäuse 44 geschützt. Der Wasserstandsensor 42 im Wassersammelraum 43 sorgt dafür, dass, wenn das Wasser eine vorgegebene Höhe erreicht, es in den Moduleinsatz 4 abgelassen wird. Im Wassersammeiraum 43 steht das Wasser einige Zeit, dadurch kann sich der noch vorhandene Kraftstoffanteil über dem stehenden Wasser sammeln. Dieser Kraftstoffanteil wird über die Drossel oder Ventil 55, die sich im Funktionsträger 80 befindet, abgesaugt und fließt dann zurück in den Kraftstofftank.

Durch die äußere Form des druckstabilen Gehäuses 44 kann im Wassersammelraum 43 der Fluss des Wassers beeinflusst werden, in dem z.B. durch Vorsprünge Beruhigungszonen im Wassersammeiraum 43 geschaffen werden (nicht gezeigt).

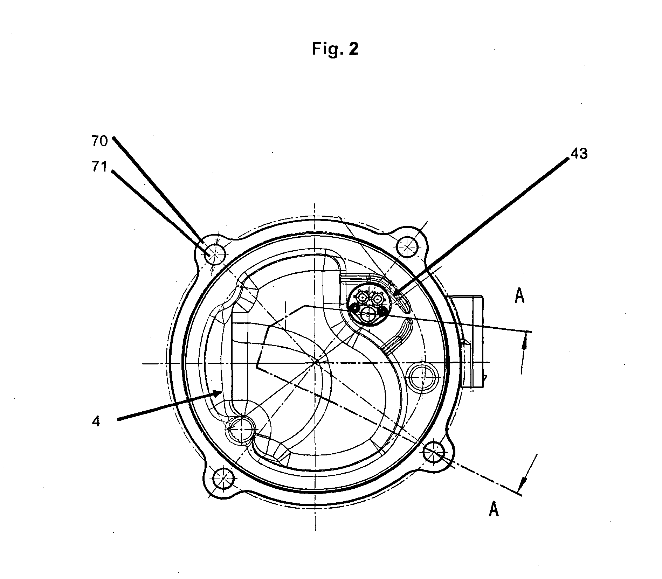

In Fig. 2 ist eine Draufsicht auf den Moduleinsatz 4 zu sehen. Um mindestens einen Wasserstandsensor 42 aufnehmen zu können, weicht das druckstabile Gehäuse 44 von der Kreisform ab. Mittels der Öffnungen 71 in den Ausbuchtungen 70 kann der Moduleinsatz 4 am Filtergehäuse 2 befestigt werden, z.B. mittels Schrauben. Der Moduleinsatz 4 ist mehrteilig aufgebaut, wobei an dem druckstabilen Gehäuse 44 der Boden 73 befestigt wird, z.B. durch Schrauben 72 oder ähnlichem. Zur Abdichtung zum Filtergehäuse 2 wird die Dichtung 74 verwendet. Über den Ablauf 49 wird das gereinigte und nun saubere Wasser in die Umgebung abgelassen.

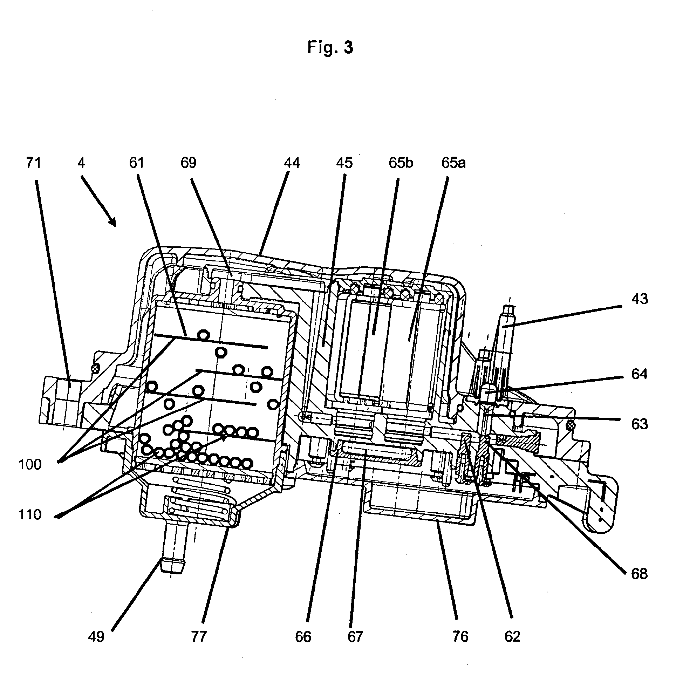

Fig. 3 zeigt das Innere des Moduleinsatzes 4 entlang des Schnittes A-A aus Fig. 2. Das aus dem Kraftstoff abgeschiedene Wasser, das sich im Wassersammelraum 43 gesammelt hat, nimmt folgenden Weg, wenn die Wasserstandssensoren 42, die Ventile 65a und 65b, z.B. Magnetventile, öffnen. Zunächst fließt das Wasser durch ein kleines Sieb 64 in den Strömungskanal 63 in dem sich weitere Sensoren 68 befinden, an den Strömungskanal 63 schließen sich die beiden Ventile 65a und 65b an. Zwischen den Ventilen 65a und 65b liegt im Strömungskanal 66 ein Verdrängerelement 67, der das Einfrieren des Wassers an dieser Stelle verhindern soll, siehe hierzu die DE 10 2007 054 770, die hiermit als incorporated by reference gilt. Über den Strömungskanal 69 gelangt das Wasser schließlich noch in das Behältnis 61, das als Reinigungskartusche ausgebildet ist und daher ausgewechselt werden kann. Im Behältnis 61 können verschiedene Materialien sein, die den verbliebenen Rest an Kraftstoff, der noch im abgelassenen Wasser enthalten ist, sorbieren.

Im Behältnis 61 kann als sorbierendes Material sowohl Aktivkohle, als auch ein Kraftstoff aufnehmendes Gewebe, Gewirr, Textilien, Teppich oder ähnliches sein. Sogar das Material des Behältnisses 61 selbst kann aus sorbierendem Material sein, das durch die Aufnahme von Kraftstoff quillt und somit dem abgeschiedenen Wasser den Restkraftstoff entzieht. Ziel ist es, dass das abgeschiedene Wasser nur noch etwa 2 ppm Kraftstoffrest enthält, dieser Anteil wird als ungefährlich für die Umwelt betrachtet. Erfindungsgemäß sind die sorbierenden Mittel im Behältnis 61 derart angeordnet sind, dass eine Verweilzeit des abgeschiedenen Wassers im Moduleinsatz 4 verlängert wird, wodurch ein besonders hoher Reinigungsgrad erreicht werden kann.

Der Moduleinsatz 4 setzt sich zusammen aus dem druckstabilen Gehäuse 44 und einem Innenteil 45, in dem die Kanäle 63, 66 und 69 angeordnet sind. Verschlossen wird der Moduleinsatz 4 von unten zum einen mit einem Boden 76 der fest mit dem Innenteil 45 verbunden ist und einem unteren Deckel 77, der es ermöglichen soll, das Behältnis 61 zu wechseln. Alternativ kann der untere Deckel 77 auch fest z.B. durch Schweißen mit dem Innenteil 45 und dem druckstabilen Gehäuse 44 verbunden sein.

Der Wasser führende Strömungskanal 69 und der Behältnis 61 im Moduleinsatz 4, die sich nach den Magnetventilen 65a und 65b befinden, sollten möglichst langsam leer laufen, um die Adsorptionsbedingungen in dem Behältnis 61 zu verbessern. Optimale Adsorptionsbedingungen herrschen bei einer bestimmten Strömung des abgeschiedenen Wassers durch den Behältnis 61, vorzugsweise strömt es von unten nach oben, alternativ kann es auch wie hier gezeigt von oben nach unter strömen. Die hierzu notwenigen Strömungskanäle 63, 66, 69 werden je nach Bedarf in dem Innenteil 45 vorgesehen.

Der Strömungskanal 69 nach den Magnetventilen 65a/b ist drucklos mit Luftpolster ausgestaltet, diese Volumenreserve dient zur Aufnahme von Volumenänderungen wie z.B. beim Einfrieren. Daher ist auch das druckstabile Gehäuse 44 notwendig, um diesen Bereich vom Druck im Kraftstoff abzuschirmen.

Durch die freie Belüftung des Ablaufs 49 nach dem Behältnis 61 mit Aktivkohlefilter kann das Wasser aus diesem Bereich und evtl. nachfolgend angeschlossenen Leitungen ablaufen (nicht gezeigt). Des Weiteren kann auch ein Belüftungsventil in dem Strömungskanal 69 vor dem Behältnis 61 vorhanden sein, welches dazu dient, dass Luft eindringen kann und dass das Wasser aus dem nachfolgenden Behältnis 61 und Leitungen abläuft. Dieses Belüftungsventil öffnet drucklos oder bei Unterdruck und schließt bei Druck (nicht gezeigt).

Die weiteren Sensoren 68 können ein Temperatursensor und eine Heizung zum Auftauen oder Betrieb bei Minusgraden sein, der Einsatz des Temperatursensors 68 und die zugehörige Signalverarbeitung sollen bewirken, dass die Magnetventile 65 bei Minusgraden nicht geöffnet werden.

Der Moduleinsatz 4 weist einen integrierten Aufbau auf, d.h. er enthält die gesamte Leitungsführung für das aus dem Kraftstoff abgeschiedene Wasser durch die im Innenteil 45 integrierten Strömungskanäle 63, 66 und 69. Der Moduleinsatz 4 bietet die Aufnahmegeometrie für die Magnetventile 65, er integriert das Behältnis 61 mit dem Absorber fest oder wechselbar, er hat Anschluss an die Stromversorgung, er leitet Ströme und Signale durch oder bietet Bauraum für Bauteile zur Signalverarbeitung. Des Weiteren nimmt er die Wasserstandssensoren 42 für die Detektion von Wasser auf, die in den Wassersammelraum 43 des Filtergehäuses 2 ragen. Die Magnetventile 65 sind so angeordnet, dass das die Magnetventile 65 stromlos geschlossen sind. Die Anordnung der Magnetventile 65 ist so, das zu mindestens bei einem Magnetventil der Kraftstoffdruck das Ventil zudrückt und das Ventil gegen den Kraftstoffdruck öffnen muss.

Der Moduleinsatz 4 ist dreiteilig zum Einbau bzw. Integration in das Kraftstofffiltergehäuse 2 aufgebaut. Der Wassersammelraum 43 wird gebildet durch die Freiräume zwischen Moduleinsatz 4 und Filtergehäuse 2. Ein druckstabiles Gehäuse 44 übernimmt die Aufnahme der Kräfte aufgrund des Kraftstoffdruckes. Das druckfeste Gehäuse 44 kann aus Alu oder schwer entflammbaren Kunststoffen sein und gewährleistet dadurch ausreichend lange die Dichtheit des Kraftstoffsystems, auch bei Fahrzeugbrand.

Damit die Verweilzeit des Wassers im Behältnis 61 möglichst groß ist, sind in diesem von der Außenwand 105 wegweisende Leitelemente 100 vorgesehen. In den Zwischenräumen befindet sich wie gezeigt das Aktivkohlegranulat 110. Die hier dargestellte Größe des Granulats ist je nach Bedarf variabel und soll eigentlich nur veranschaulichen, wie ungefähr das Aktivkohlegranulat 110 in dem Behältnis 61 angeordnet ist. Auch wurde der Übersichtlichkeit halber darauf verzichtet das gesamte Behältnis 61 in der Fig. 3 mit dem Aktivkohlegranulat auszufüllen, was natürlich bei reinem realen Produkt der Fall ist. Die Leitelemente 100 müssen in dem Behältnis 61 so angeordnet sein, dass es nicht zu einem beschleunigten Abfließen des Wassers durch Kriecheffekte kommen kann. Es besteht auch die Möglichkeit sowohl Aktivkohlegranulat als auch Aktivkohlefasern in das Behältnis 61 hinein zu schichten. Die Leitelemente 100 sind vorzugsweise aus einem Material, das ebenfalls den Kraftstoff adsorbiert, genau wie die Auβenwände 105 des Behältnis 61.

In Fig. 4 ist ein vergrößerter Ausschnitt aus Fig. 3 zu sehen. Bei diesem Ausführungsbeispiel ist statt dem Aktivkohlegranulat ein Gewirr, Gestrick oder andere Fasern 108 zwischen den Leitelementen 107 angeordnet. Die Leitelemente 107 sind nicht mit der Außenwand 105 verbunden, sondern liegen lose zwischen den Faserschichten 108. Die Fasern 108 können aus Aktivkohle oder anderen Kraftstoffspeichernden Materialien sein.

Alternativ könnten auch zu dem Aktivkohlegranulat Chips hineingegeben werden, die sich dann zufällig anordnen und ebenfalls zu einer Erhöhung der Verweilzeit des Wassers im Behältnis 61 führen. Diese Chips könnten ebenso wie die Leitelemente 107 aus einem Kunststoff sein, so dass sie auch Kraftstoff speichern (nicht gezeigt).

Bei allen vorgestellten Alternativen sitzen weder das Aktivkohlegranulat, noch die eingelegten Leitelemente 105 so locker, dass sie sich verschieben können. Am unteren Ende des Behältnis 61 befindet sich eine Bodenplatte 102 mit Löchern durch die das Wasser abfließen kann. Es fliest dann in den Deckel 76 der das Behältnis 61 von unten verschließt und kann über den Ablauf 49 in die Umgebung ablaufen.

In Fig. 5 ist noch ein weiteres Ausführungsbeispiel gezeigt. Hier wurde in das Behältnis 61 ein spiralförmiges Leitelement 106 eingesetzt und Aktivkohlegranulat 110 verwendet. Auch dieses Leitelement 106 sollte so gestaltet sein, dass das Wasser nicht durch Kriecheffekte an dem Aktivkohlegranulat vorbeigelenkt wird und ungereinigt das Behältnis 61 verlässt.

Alternativ können auch mehrere Behältnisse 61 in dem Moduleinsatz 4 enthalten sein, die nacheinander vom zu reinigenden Wasser durchflossen werden. Jedes dieser Behältnisse 61 kann in seinem Innern ja nach Bedarf anders aufgebaut sein.

## Patentansprüche

1. Moduleinsatz (4) zum Einbau in einen Flüssigkeitsfilter zur Reinigung von im Flüssigkeitsfilter abgeschiedenem Wasser, insbesondere zum Einbau in einen Kraftstofffilter, mit mindestens einem Wasserstandssensor, mindestens einem Ventil (65) und mindestens einem Strömungskanal (63,66,69) für das Wasser, sowie mindestens einem Behältnis (61) mit sorbierenden Mitteln zur Aufnahme von Verunreinigungen aus dem abgeschiedenen Wasser, die derart in dem Behältnis (61) angeordnet sind, dass eine möglichst lange Verweildauer des Wassers im Bereich der sorbierenden Mitteln erreicht werden kann,
**dadurch gekennzeichnet,**
**dass** innerhalb des Behältnisses (61) zumindest ein Leitelement (100,105,106,107) angeordnet ist, welches die Verweilzeit des abgeschiedenen Wassers im Moduleinsatz (4) verlängert.

2. Moduleinsatz nach Anspruch 1,
**dadurch gekennzeichnet,**
**dass** das sorbierende Mittel Aktivkohle aufweist.

3. Moduleinsatz nach Anspruch 1 oder 2,
**dadurch gekennzeichnet,**
**dass** wobei das zumindest eine Leitelement (100,105,106,107) aus sorbierendem Material besteht oder derartiges aufweist.

4. Moduleinsatz nach einem der Ansprüche 1 bis 3,
**dadurch gekennzeichnet,**
**dass** das sorbierende Mittel eine Textilie ist, die Kraftstoff aufnehmen kann.

5. Moduleinsatz nach Anspruch 2 bis 4,
**dadurch gekennzeichnet,**
**dass** die Aktivkohle als Granulat oder als Fasermaterial ausgebildet ist.

6. Moduleinsatz nach Anspruch 5,
**dadurch gekennzeichnet,**
**dass** das Aktivkohlegranulat eine Körnung von 0,01 bis 5 mm hat.

7. Moduleinsatz nach einem der Ansprüche 1 bis 6,
**dadurch gekennzeichnet,**
**dass** in dem zumindest einen Wasser führenden Strömungskanal (63,66,69) des Flüssigkeitsfilters zumindest bereichsweise ein Verdrängerelement als Einfriersicherung vorgesehen ist.

8. Moduleinsatz nach einem der Ansprüche 1 bis 7,
**dadurch gekennzeichnet,**
**dass** mindestens zwei Magnetventile (65) vorhanden sind.

9. Moduleinsatz nach einem der Ansprüche 1 bis 8,
**dadurch gekennzeichnet,**
**dass** das sorbierende Mittel ein Gewebe oder ein Gewirr ist, welches zur Kraftstoffspeicherung ausgebildet ist.

10. Moduleinsatz nach einem der Ansprüche 1 bis 9,
**dadurch gekennzeichnet,**
**dass** das Behältnis (61) eine wechselbare Reinigerkartusche ist, die das sorbierende Mittel enthält.

11. Moduleinsatz nach einem der Ansprüche 1 bis 10,
**dadurch gekennzeichnet,**
**dass** das Behältnis (61) selbst aus Kunststoff besteht und Kraftstoff speichern kann.

12. Moduleinsatz nach einem der Ansprüche 1 bis 11,
**dadurch gekennzeichnet,**
**dass** in zumindest einem Strömungskanal (63,66,69) eine Heizung angeordnet ist, um bei Minusgraden ein Einfrieren zu verhindern.

13. Kraftstofffilter aufweisend ein Filtergehäuse (2), einen Funktionsträger, einen Deckel (1), ein Filterelement (3), Zu- und Ablaufleitungen für den Kraftstoff, sowie einen Moduleinsatz zum Einbau in einen Flüssigkeitsfilter zur Reinigung des abgeschiedenen Wassers gemäß einem der vorstehenden Ansprüche.

14. Kraftstofffilter nach Anspruch 13, wobei das Filtergehäuse (2) und ein Funktionsträger zusammen die Zu- und Ablaufleitungen zum Filterelement (3) bilden.

## Claims

1. A module insert (4) for installation in a liquid filter for cleaning water separated out in the liquid filter, in particular for installation in a fuel filter, having at least one water level sensor, at least one valve (65) and at least one flow channel (63, 66, 69) for the water, as well as at least one reservoir (61) with sorbent means for absorbing impurities from the water separated out, which are arranged in the reservoir (61) in such a manner that the longest possible dwell time of the water in the region of the sorbent means can be achieved,
**characterised in that**
at least one conducting element (100, 105, 106, 107) is arranged inside the reservoir (61), which conducting element extends the dwell time of the water separated out in the module insert (4).

2. The module insert according to Claim 1, **characterised in that** the sorbent means contain active carbon.

3. The module insert according to Claim 1 or 2, **characterised in that** the at least one conducting element (100, 105, 106, 107) consists of sorbent material or contains such material.

4. The module insert according to any one of Claims 1 to 3, **characterised in that** the sorbent material is a textile which can absorb fuel.

5. The module insert according to Claim 2 to 4, **characterised in that** the active carbon is configured as granules or a fibre material.

6. The module insert according to Claim 5, **characterised in that** the active carbon granules have a grain size of 0.01 to 5 mm.

7. The module insert according to any one of Claims 1 to 6, **characterised in that** a displacer element is provided as an anti-freezing means at least in some regions in the at least one water-conducting flow channel (63, 66, 69) of the liquid filter.

8. The module insert according to any one of Claims 1 to 7, **characterised in that** at least two solenoid valves (65) are present.

9. The module insert according to any one of Claims 1 to 8, **characterised in that** the sorbent means is a woven or nonwoven fabric which is configured for storing fuel.

10. The module insert according to any one of Claims 1 to 9, **characterised in that** the reservoir (61) is a replaceable cleaning cartridge which contains the sorbent means.

11. The module insert according to any one of Claims 1 to 10, **characterised in that** the reservoir (61) itself consists of plastic and can store fuel.

12. The module insert according to any one of Claims 1 to 11, **characterised in that** a heating system is arranged in at least one flow channel (63, 66, 69) to prevent freezing at sub-zero temperatures.

13. Fuel filter having a filter housing (2), a functional carrier, a lid (1), a filter element (3), inlet and outlet lines for the fuel and a module insert for installation in a liquid filter for cleaning the water separated out according to any one of the preceding claims.

14. Fuel filter according to Claim 13, wherein the filter housing (2) and a functional carrier together form the inlet and outlet lines for the filter element (3).

## Revendications

1. Module d'insertion (4) à monter dans un filtre à liquide pour purifier l'eau séparée dans le filtre à liquide, notamment à monter dans un filtre à carburant, comportant au moins un capteur de niveau d'eau, au moins une soupape (65) et au moins un canal d'écoulement (63, 66, 69) pour l'eau, ainsi qu'au moins un récipient (61) avec des moyens absorbants pour recueillir les impuretés provenant de l'eau séparée, qui sont disposés dans le récipient (61) de telle sorte qu'une durée de séjour la plus longue possible de l'eau au niveau des moyens absorbants puisse être obtenue, **caractérisé en ce que** à l'intérieur du récipient (61) au moins un élément conducteur (100, 105, 106, 107) est disposé, qui prolonge le temps de séjour de l'eau séparée dans le module d'insertion (4).

2. Module d'insertion selon la revendication 1, **caractérisé en ce que** les moyens absorbants présentent des charbons actifs.

3. Module d'insertion selon les revendications 1 ou 2, **caractérisé en ce que** au moins un élément conducteur (100, 105, 106, 107) est constitué d'un matériau absorbant ou présente celui-ci.

4. Module d'insertion selon une des revendications 1 à 3, **caractérisé en ce que** les moyens absorbants sont un textile, qui peut renfermer du carburant.

5. Module d'insertion selon les revendications 2 à 4, **caractérisé en ce que** es charbons actifs sont conçus comme des granulés ou comme un matériau fibreux.

6. Module d'insertion selon la revendication 5, **caractérisé en ce que** le granulé de charbon actif présente une granulométrie de 0,01 à 5 mm.

7. Module d'insertion selon une des revendications 1 à 6, **caractérisé en ce que** dans au moins un canal d'écoulement guidant de l'eau (63, 66, 69) du filtre à liquide, un élément de refoulement est prévu au moins sur des portions comme sécurité antigel.

8. Module d'insertion selon une des revendications 1 à 7, **caractérisé en ce que** au moins deux soupapes magnétiques (65) sont présentes.

9. Module d'insertion selon une des revendications 1 à 8, **caractérisé en ce que** les moyens absorbants sont un voile non tissé ou un entrelacs, qui est conçu afin de stocker du carburant.

10. Module d'insertion selon une des revendications 1 à 9, **caractérisé en ce que** le récipient (61) est un cartouche nettoyante remplaçable, qui contient des moyens absorbants.

11. Module d'-insertion selon une des revendications 1 à 10, **caractérisé en ce que** le récipient (61) peut lui-même être constitué de plastique et stocker du carburant.

12. Module d'insertion selon une des revendications 1 à 11, **caractérisé en ce que** dans au moins un canal d'écoulement (63, 66, 69) un dispositif de chauffage est disposé, pour empêcher une congélation en présence de températures au-dessous de zéro.

13. Filtre à carburant présentant un logement de filtre (2), un support fonctionnel, un couvercle (1), un élément de filtre (3), des conduites d'amenée et d'évacuation pour le carburant ainsi qu'un module d'insertion à monter dans un filtre à) liquide en vue de la purification de l'eau séparée selon une des revendications précédentes.

14. Filtre à carburant selon la revendication 13, dans lequel le logement de filtre (2) et un support fonctionnel forment conjointement les conduites d'amenée et d'évacuation vers l'élément de filtre (3).
